# EUROPÄISCHE PATENTSCHRIFT

(11) **EP 0 508 986 B1**
(45) Veröffentlichungstag und Bekanntmachung des Hinweises auf die Patenterteilung: **26.01.1994**
(21) Anmeldenummer: 90916279.4
(22) Anmeldetag: 09.11.1990
(51) Int. Cl.: C02F 1/04, B01D 3/42

(54) **VERFAHREN ZUM REINIGEN VON ORGANISCH BELASTETEM ABWASSER**
PROCESS FOR PURIFYING ORGANICALLY POLLUTED WASTE WATER
PROCEDE D'EPURATION D'EAUX RESIDUAIRES CHARGEES DE MATIERES ORGANIQUES

(30) Priorität: 11.11.1989 DE 3937608
(43) Veröffentlichungstag der Anmeldung: 21.10.1992
(73) Patentinhaber: HOISS, Jakob, D-80637 München (DE)
(72) Erfinder: HOISS, Jakob, D-80637 München (DE)
(74) Vertreter: Dreiss, Fuhlendorf, Steimle & Becker, Patentanwälte
(86) Internationale Anmeldenummer: EP9001873
(87) Internationale Veröffentlichungsnummer: WO9107353

(56) Entgegenhaltungen:
- DE-A- 3 214 647
- DE-C- 2 600 398
- DE-C- 2 920 212
- US-A- 3 840 437
- US-A-39 058 73
- Zeitschrift für wirtschaftliche Fertigung, Volume 79, no. 3, 1984 J. Hoiss: "Recycling von nitrat-nitrithaltigen Spülwässern aus Härtereibetrieben", see page 141, 145

## Beschreibung

Die vorliegende Erfindung bezieht sich auf ein Verfahren und eine Vorrichtung zum Reinigen von insbesondere im wesentlichen organisch belastetem Abwasser nach dem Oberbegriff des Anspruchs 1 bzw. dem des Anspruchs 8.

Bei einem Verfahren und einer Vorrichtung zum Destillieren von Rohwasser, wie es bzw. sie aus der DE-A-26 00 398 bekannt geworden ist, wird ebenfalls ein Zweikreissystem verwendet, bei dem zu einem Verdampfungsprozeß ein Wärmepumpen-Kreisprozeß angekoppelt ist. Dies hat einerseits den Vorteil, daß qualitativ hochwertiges, d.h. hochreines Destillat, wie es bspw. in der pharmazeutischen, biotechnischen und elektrotechnischen Industrie gefordert wird, erzeugt werden kann, und daß andererseits dies in sehr wirtschaftlicher Weise erreichbar ist. Bei der Destillation von Rohwasser wird, was in der genannten Druckschrift nicht erwähnt ist, die eingeengte Rohwasser- Sumpflösung etwa einmal pro Monat abgezogen. Dies reicht wegen der nur unwesentlichen Belastung des Rohwassers, wenn dieses Trinkwasserqualität aufweist, aus, denn der Zweikreisprozeß wird während dieser Zeitdauer praktisch nicht nachteilig beeinflußt. Dennoch bedeutet dies einen diskontinuierlichen Prozeß, was nachteilig ist.

Gemäß einem Aufsatz von J. Hoiß, in "Zeitschrift für wirtschaftliche Fertigung", 79. Jahrgang, 1984, Seiten 141-145, wurde untersucht, wie sich das Verfahren bzw. die Vorrichtung verhält, wenn sie bzw. es zum Reinigen von nitrat-nitrithaltigen Spülwässern aus Härtereibetrieben verwendet wird. Ziel der Versuche war insbesondere, zu ermitteln, ob sich eine Abhängigkeit der Qualität des Destillates von der Konzentration der eingeengten nitrat-nitrithaltigen Spülwasser-Sumpflösung ergibt. Da sich eine Qualitätsverschlechterung des Destillats in Abhängiskeit von dieser Sumpflösungskonzentration ergeben hat, wurden in diesem Artikel zwei Möglichkeiten der Fahrweise des Prozesses angeführt, nämlich ein kontiniuerliches Arbeiten mit etwa zehn bis fünfzehn Prozent kontinuierlichem Sumpfabzug oder ein diskontinuierliches Arbeiten so lange, bis der Sumpf sich so weit sättigt, daß die Leistungsaufnahme der Vorrichtung prozeßeigene Grenzwerte erreicht. Die zweite der genannten Möglichkeiten leidet unter dem obengenannten Nachteil der Diskontinuität, was Anhalten der Vorrichtung, Entsorgen der Sumpflösung, Reinigen der Vorrichtung und ggf. Entfernen von Belägen in der Vorrichtung bedeutet. Außerdem muß die Qualität des Destillats während des Prozesses ständig überwacht werden, um das Verfahren auch zu einem ungünstigen Zeitpunkt stoppen zu können. Dies ist relativ aufwendig. Die o.g. erste Möglichkeit führt zwar zu einer Kontinuität im Prozeßablauf, setzt jedoch voraus, daß derartige nitrat-nitrithaltige Spülwässer von stets gleichbleibender "Qualität" sind, um das prozentuale Maß des kontinuierlichen Sumpfabzugs festsetzen zu können.

Will man nun Industrie-Abwässer, insbesondere im wesentlichen organisch belastete Abwässer reinigen bzw. destillieren, so sind die o.g. Möglichkeiten der Prozeßführung nicht so ohne weiteres durchführbar, nicht zuletzt deshalb, weil die Gesamtbelastung an chemisch oxidierbaren Stoffen, im wesentlichen organische Belastung, für deren Maß der sog. CSB-Wert (Wert des chemischen Sauerstoffbedarfs) von Bedeutung ist, sehr unterschiedlich sein kann. Zunächst ist davon auszugehen, daß ein diskontiuierlicher Betrieb bzw. Prozeßdurchführung wegen der o.g. Nachteile nicht in Frage kommt. Eine kontinuierliche Prozeßführung mit einem kontiuierlichen Abziehen eingeengter Abwasser-Sumpflösung ist aus folgenden Gründen praktisch nicht durchführbar: Derartige Abwässer stellen ein Vielstoffgemisch dar, das neben Wasser viele sich unterschiedlich verhaltende Problemstoffe beinhaltet. Derartige Problemstoffe sind bspw. niedersiedende Bestandteile, deren Siedetemperatur also zum Teil erheblich unter derjenigen von Wasser liegt, und schaumbildende Bestandteile, die eine Destillation des Abwassers in Frage stellen können. Die niedersiedenden Bestandteile bspw. gasen aus und bilden Gasnester dort, wo die Kondensation des Abwasserdampfes stattfinden soll. Die Folge davon sind Instabilitäten im angekoppelten Wärmepumpen- Kreisprozeß, so daß die Wärmebilanz im Verfahren bzw. der Vorrichtung durch mögliche unterschiedliche spezifische Wärmeübergänge in den einzelnen Prozeßstufen nicht mehr stimmt. Dies kann zu einem Anstieg der Überhitzung im Sekundärsystem und damit zu einer zu hohen Temperatur führen, was. um Zerstörungen zu vermeiden, zum Abschalten des Prozesses bzw. der Vorrichtung führen muß. In ähnlicher Weise wirken die schaumbildenden Bestandteile in solchen Abwässern, und zwar aufgrund der Tatsache, daß sie die Prozeßstufe, in der das Abwässer verdampft, zusetzen und diejenige Prozeßstufe, in der der Abwasserdampf im Zyklon gereinigt wird, lahmlegen können.

Aufgabe der vorliegenden Erfindung ist es deshalb, ein Verfahren und eine Vorrichtung zum Reinigen bzw. Destillieren von insbesondere im wesentlichen organisch belastetem Abwasser der eingangs genannten Art zu schaffen, bei dem auch bei solchen Abwässern dennoch in prozeßtechnisch einfacher Weise eine kontinuierlicheProzeßführung erreicht ist.

Zur Lösung dieser Aufgabe sind bei einem Verfahren und einer Vorrichtung der genannten Art die im Anspruch 1 bzw. die im Anspruch 8 angegebenen Merkmale vorgesehen.

Mit den erfindungsgemäßen Maßnahmen ist erreicht, daß unter Aufrechterhaltung einer kontinuierlichen Prozeßführung es auch bei unterschiedlich organisch belasteten Abwässern möglich ist, bei möglichst gleichbleibender Qualität des Destillats einen stabilen Prozeß aufrechtzuerhalten. Der betreffende Betriebsparameter des Sekundärsystems erfaßt in vorteilhafter Weise mittelbar die Wärmeübergangsverhältnisse im Primärystem, die sich unmittelbar auf den Wärmepumpen-Kreisprozeß übertragen, so daß sich die Prozeßführung auf das mehr oder weniger gehäufte Auftreten der o.g. Problemstoffe einstellen kann.

Wenn aus einem oder mehreren der eingangs genannten Gründe, also sei es, daß zu wenig Abwasserdampf kondensiert wird, in der Prozeßstufe der Abwasserdampfkondensierung bzw. der Sekundärmediumverdampfung die Wärmebilanz nicht mehr stimmt, wird im Sekundärsystem der Massenstrom dadurch aufrechterhalten, daß die Druckdifferenz zwischen Ein- und Austritt am Verdichter von diesem erhöht wird. Dies bedeutet, daß es grundsätzlich möglich wäre, den Differenzdruck am Verdichter zu messen, was jedoch relativ aufwendig und teuer ist. Da mit der Erhöhung des Differenzdruckes der Überhitzungsanteil des Sekundärmediums steigt, ist es zweckmäßig, gemäß einem Ausführungsbeispiel vorliegender Erfindung die Merkmale gemäß Anspruch 2 bzw. gemäß Anspruch 9 vorzusehen. Das Messen der Überhitzungstemperatur ist relativ einfach und mit kostengünstigen Mitteln durchführbar.

Gemäß einem dazu alternativen Ausführungsbeispiel vorliegender Erfindung sind die Merkmale gemäß Anspruch 3 bzw. gemäß Anspruch 10 vorgesehen. Auch dies ist eine relativ kostengünstige Möglichkeit, bei der berücksichtigt ist, daß die Stromaufnahme des elektrischen Antriebs des Verdichters mit der Erhöhung der Druckdifferenz und damit mit der Erhöhung der Ausgangleistung steigt.

Insbesondere bei einem hohen Anteil an schaumbildenden Bestandteilen ist es zweckmäßig, die Merkmale gemäß Anspruch 4 bzw. gemäß Anspruch 11 vorzusehen. Dadurch ist verhindert, daß zu viel Abwasser auf einmal neu in den Prozeß einströmt und die Prozeßstufe der Abwasserverdampfung dadurch stören könnte, daß sowohl die Warmebilanz in diesem Wärmetauscher durch den sich bildenden und sich an den Wärmetauscherflächen absetzenden Schaum gestört als auch der im Abwasserdampf mitgerissene Schaumanteil die Destillatqualität stark verschlechtert würde. Außerdem ist dieses getaktete Einlassen von zu destillierendem Abwasser auch im Hinblick auf die Stabilität des Prozesses von Vorteil. da das Temperaturniveau auf diese Weise nicht zu große Einbrüche erhält.

Da die Bestandteile in der abzuziehenden eingeengten Abwasser-Sumpflösung insbesondere dann, wenn der Prozeß unter Überdruck gefahren wird, dazu neigen, beim Ablassen in einen Auffangbehälter, der unter Umgebungsdruck steht, zu kristallisieren, ist es zweckmäßig, die Merkmale gemäß Anspruch 12 vorzusehen, um zu verhindern, daß sich die Abzugsöffnung und/oder die zum Auffangbehälter führende Rohrleitung zusetzt.

Insbesondere dann, wenn das zu destillierende bzw. zu reinigende Abwasser mit einem relativ hohen Anteil an bspw. Inertgasen belastet ist, ist es von besonderem Vorteil, die Merkmale gemäß Anspruch 5 bzw. gemäß Anspruch 13 vorzusehen. Dadurch ist vermieden, daß die Wärmebilanz in der Prozeßstufe, in der der Abwasserdampf wieder kondensiert, dadurch gestört wird, daß sich die Inertgase als eine Art Wärmeisolator über die Wärmetauscherflächen legen.

Das Ablassen dieser leichteren Gase kann, wenn vorausgesetzt werden kann, daß ihr Anteil hoch ist, kontinuierlich vorgenommen werden. Es ist jedoch in diesen Fällen zweckmäßig, die Merkmale gemäß Anspruch 6 oder gemäß Anspruch 14 vorzusehen, um zu verhindern, daß bei einem geringeren Anteil an derartigen leichteren Gasen Wasserdampf mit abgezogen wird, was den Wirkungsgrad des Prozesses verschlechtern würde.

Als Kriterium für die Einleitung von Abwasser in öffentliche Kläranlagen gibt es neben dem Summenparameter CSB auch noch den Grenzwert des Ammoniumgehaltes des Abwassers. Um ggf. den Ammoniumgehalt im Destillat reduzieren zu können, ist insbesondere auch unabhängig vom vorgenannten Regelungsverfahren von besonderem Vorteil, die Merkmale gemäß Anspruch 7 bzw. Anspruch 15 vorzusehen.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist. Es zeigen:
- Figur 1: in schematischer Darstellung ein Fließbild einer Vorrichtung zum Reinigen bzw. Destillieren von im wesentlichen organisch belasteten Abwässern und
- Figur 2: in vergrößerter Darstellung denjenigen Teil der Vorrichtung ,der das Zweikreis-Prozeßsystem beinhaltet, zusammen mit einem Abschlämmbehälter.

Die in der Zeichnung gemäß einem bevorzugten Ausführungsbeispiel vorliegender Erifndung dargestellte Vorrichtung 11 dient zum Reinigen bzw. Destillieren von organisch belasteten Abwässern, wie sie bspw. in entsprechenden Industriebetrieben anfallen. Beim dargestellten Ausführungsbeispiel wird ein Zweikreissystem 12 mit einem Primärsystem 13 für das zu behandelnde Abwasser und einem räumlich davon getrennten in sich geschlossenen Sekundärsystem 14 verwendet, das unter Überdruck gefahren wird. Es versteht sich, daß es auch möglich ist, ein Zweikreissystem 12 zu verwenden, bei dem im Vakuum verdampft wird.

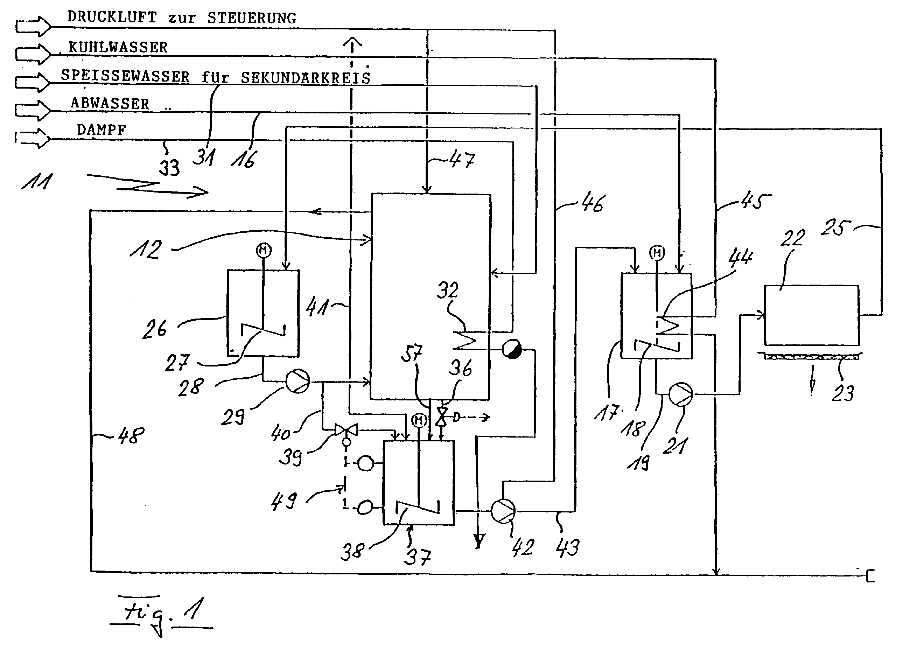

Gemäß Figur 1 wird über eine von einer nicht dargestellten Industrieanlage kommenden Rohrleitung 16 zu behandelndes Abwasser einem ersten Vorlagebehälter 17 zugefuhrt, der mit einem motorisch angetriebenen Rührwerk 18 versehen ist, damit sich keine festen Bestandteile in dem zu behandelnden Abwasser am Behälterboden absetzen können und die Wärmeverteilung verbessert wird. Das Abwasser wird in einer Rohrleitung 19 über eine Pumpe 21 einer Filterpresse 22 zugeführt, deren Filterkuchen 23 in im wesentlichen feuchter Form diejenigen Feststoffe enthält, die aus dem Abwasser durch Filtration separiert werden können. Dieser Filterkuchen 23 kann dann an einer Deponie abgelagert oder weiter entsorgt werden. Das Filtrat bzw. filtrierte Abwasser wird dann über eine Rohrleitung 25 einem zweiten Vorlagebehälter 26 zugeführt, der ebenfalls mit einem motorischen Rührwerk 27 versehen ist. Über eine Ausgangleitung 28 und eine Pumpe 29 wird das filtrierte Abwasser in den Primärkreis 13 des Zweikreissystems 12 gespeist. Das Abwasser hat hier eine Temperatur von etwa 15 bis 20°C.

Während also das Primärsystem 13 des Zweikreis-Wärmepumpensystems 12 mit dem zu behandelnden filtrierten Abwasser gespeist wird, ist das in sich geschlossene Sekundärsystem 14 mit einer absperrbaren Rohrleitung 31 zum Zuführen von Speisewasser als Sekundärmedium verbunden. Im Primärsystem 13 ist außerdem, wie noch zu zeigen sein wird, eine Fremdheizung 32 installiert, die beim dargestellten Ausführungsbeispiel über eine Rohrleitung 33 mit Heizdampf versorgt wird. Es versteht sich, daß die Fremdheizung 32 auch elektrisch betreibbar ist.

Bodenseitig ist das Primärsystem 13 des Zweikreissystems 12 mit einer absperrbaren Abzugsrohrleitung 36 versehen, die in einen Abschlämmbehälter 37 führt, welcher mit einem motorisch angetriebenen Rührwerk 38 versehen ist. Über die Abzugsrohrleitung 36 gelangt eingeengte Abwasser-Sumpflösung aus dem Primärsystem 13 gesteuert in den Abschlämmbehälter 37, wobei die Lösung beim dargestellten Ausführungsbeispiel über 100°C heiß ist. Diese heiße eingeengte Abwasser-Sumpflösung wird über einen mit einem Ventil 39 versehen Abzweig 40 der Rohrleitung 28 im Abschlämmbehälter 37 mit filtiriertem Abwasser vermischt, so daß ausgangsseitig eine Abwasserlösung von unter 100°C zu transportieren ist. Hierzu ist das Ventil 39 von einer kombinierten Temperatur/Füllstandssteuerung 49 gesteuert. Ausgangsseitig des Abschlämmbehälters 37, der mit einer Entlüftungsleitung 41 versehen ist, wird über eine druckluftbetriebene Pumpe 42 in einer Rohrleitung 43 diese Abwasserlösungsmischung dem ersten Vorlagebehälter 17 zugeführt und dort mit dem "frischen" Abwasser aus der Rohrleitung 16 vermischt und mit diesem wiederum der Filterpresse 22 zugeführt. In dem ersten Vorlagebehälter 17 ist eine Kühleinrichtung 44 vorgesehen, die über eine Rohrleitung 45 mit Kühlwasser gespeist wird. Die druckluftbetriebene Pumpe 42 erhält über eine Rohrleitung 46 Druckluft zugeführt, deren Abzweigleitung 47 dem Zweikreis-Wärmepumpensystem 12 zu deren Druchluftsteuerung zugeführt wird.

Das ausgangsseitig des Primärsystems 13 des Zweikreissystems 12 erhältliche Destillat des gereinigten bzw. destillierten Abwassers wird über eine Ausgangsleitung 48, in die beim Ausführungsbeispiel die Kühlwasserleitung 45 der Kühleinrichtung 44 mündet, entweder einem Abwasserkanal oder dem Industrieprozeß als wiederverwendbares Rohwasser zugeführt. Das destillierte Abwasser besitzt dabei einen CSB (chemischer Sauerstoffbedarf)- Wert, der den wasserrechtlichen Forderungen entspricht. Das Kühlwasser in der Kühlwasserleitung 45 kann alternativ auch in den Kühlwasserkreislauf rückgeführt werden.

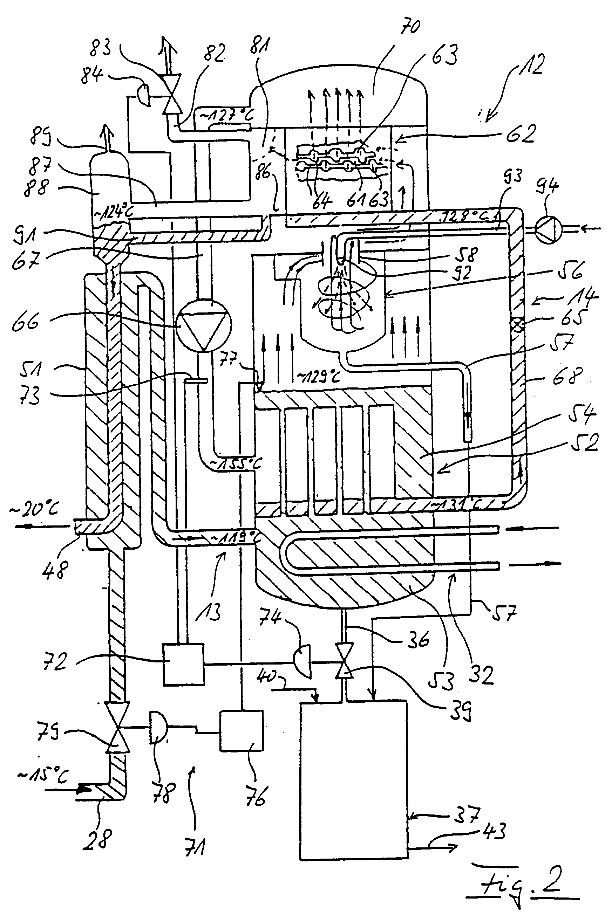

Im folgenden sei nun anhand der Figur 2 die Arbeitsweise des Zweikreissystems 12 beschrieben. Das durch die Rohrleitung 28 in das Primärsystem 13 eintretende Abwasser wird im Gegenstrom zum aus der Ausgangleitung 48 austretenden Destillat einem Vorwärmetauscher 51 bis knapp unterhalb der Destilliertemperatur vorgewärmt. Der Vorwärmetauscher 51 ist hier als spiralförmiger Doppelrohrwärmeübertrager ausgebildet. Vom Vorwärmetauscher 51 gelangt das gefilterte Abwasser in einen Sumpfbereich 53 eines ersten Wärmetauschers 52, der im Primärsystem 13 als Verdampfer arbeitet. Im Sumpfbereich 53 des ersten Wärmetauschers 52 ist die Fremdheizung 32 angeordnet,die im wesentlichen lediglich zum Anfahren des Prozesses aus dem kalten Zustand dient. Vom Sumpfbereich 53 aus steigt das zu behandelnde Abwasser in den Verdampferbereich 51 des ersten Wärmetauschers 52, der in Form eines Wellflächenverdampfers ausgebildet ist. Der in den Rohren des Verdampferbereichs 54 des ersten Wärmetauschers 52 erzeugte Abwasser- bzw. Destillatdampf steigt nach oben und passiert ein Zyklon 56, in welchem die Trennung von mitgerissenen Tröpfchen und Partikeln aufgrund einer sehr hohen Zentrifugalbeschleunigung des Dampfes staffindet. Durch einen physikalischen Effekt bildet sich zwischen Zykloninnenwand und dem Destillatdampf ein Wasserfilm, der den Vorteil hat, alle auszentrifugierten Tröpfchen und Partikel zu binden und selbst den Kontakt des Destillatdampfes mit der Wand zu verhindern. Da der Wasserfilm aufgrund des inneren Strömungsfeldes in den unteren Teil des Zyklons wandert, gelangt er nicht in das Destillat. Über ein bodenseitiges Rohr 57 wird das zusammenlaufende Wasser abgeführt und in den Abschlämmbehälter 37 rückgeführt. Der Destillatdampf selbst kommt nicht an den kritischen Stellen der höchsten Geschwindigkeit mit der Metallfläche in Berührung, sondern gelangt über das in der Mitte des Zyklons 56 angebrachte Tauchrohr 58 in einen zweiten Wärmetauscher 62, der im Primärsystem 13 als Kondensator wirkt. Wie in Figur 2 ausschnittsweise dargestellt ist, ist dieser zweite Wärmetauscher 62 in Form eines Wellflächenverdampfers/-kondensators ausgebildet, bei dem der aus dem Zyklon 56 austretende Dampf nach einer Richtungsänderung um 90° Spalträume 61 zwischen aufrechten Wellflächenplatten 64 durchströmt und dabei kondensiert. Das Kondensat, in Form des Abwasserdestillats, verläßt durch den Vorwärmetauscher 51 und die Ausgangsleitung 48 das Primärsystem 13.

Die im Primärsystem 13 an dem als Kondensator wirkenden zweiten Wärmetauscher 62 freiwerdende Kondensationswärme des Primärmediums (zu reinigendes Abwasser bzw. Abwasserdampf) wird benutzt, um hier im Sekundärsystem 14 eine Verdampfung des Sekundärmediums, das hier Rohwasser ist, durchzuführen. Dieses Rohwasser wird nur einmal in das Sekundärsystem 14 eingespeist. Der entstehende Rohwasserdampf im Sekundärsystem 14 wird über einen nicht dargestellten herkömmlichen Tropfenabscheider vom oberen Teil des Zweikreissystems 12 in einen Verdichter 66 geführt. der elektrisch angetrieben ist. Im Verdichter 66 findet eine Kompression und eine damit verbundene Temperaturerhöhung statt. Der den Verdichter verlassende Dampf des Sekundärmediums ist heiß genug, um im ersten Wärmetauscher 52, der im Sekundärsystem 14 als Verdampfer wirkt im wesentlichen als alleiniges Heizmedium zum Verdampfen des vorerwärmten gefilterten Abwassers zu dienen. Eine Energiezuführung über die Fremdheizung 32 ist in diesem Betriebszustand nur noch nötig, um den Wärmeverlust durch die heiße, abgeschlämmte Abwasser-Sumpflösung zu decken. Durch die Kondensation des Dampfes des Sekundärmediums im ersten Wärmetauscher 52 wird in diesem das Abwasser verdampft. Das anfallende Kondensat des Sekundärmediums verläßt den ersten Wärmetauscher 52 und gelangt über ein Rohr 68 und über ein Drosselventil 65 in den oberen zweiten Wärmetauscher 62, der im Sekundärsystem 11 als Verdampfer arbeitet. Das Kondensat des Sekundärmediums strömt in einen Bodenbereich des zweiten Wärmetauschers 62 ein und strömt als Dampf durch die Rohrräume 63 der Wellflächenplatten 64 senkrecht nach oben in einen Auffangraum 70 und von dort über das Rohr 67 zurück zum Verdichter 66. Es versteht sich, daß die beiden Systeme 13 und 14 vollkommen voneinander getrennt sind und daß in entsprechender Weise der dargestellte Wellflächenplatten-Wärmetauscher 62 ausgebildet ist. Wenn auch in schematisch anderer Weise dargestellt, so kann der erste Wärmetauscher 52 abenfalls eine derartige Konstruktion besitzen.

Da das zu reinigende bzw. zu destillierende Abwasser im wesentlichen organisch belastet ist und daher ein Vielstoffgemisch mit verschiedenen Problemstoffen darstellt, wie bspw. niedersiedende Bestandteile, schaumbildende Bestandteile usw., ist die Vorrichtung 11 mit einer Regeleinrichtung 71 ausgestattet , die einen kontiuierlichen Prozeßablauf ermöglicht, unabhängig davon, wie hoch die organische Belastung ist und welche Problemstoffe in welchen Anteilen darin enthalten sind. Dazu ist eine erste Regeleinheit 72 vorgesehen, die einerseits mit einem Überhitzungstemperaturfühler 73 und andererseits mit einem Antrieb 74 des Ventils 39 in der Abzugsrohrleitung 36 verbunden ist. Der Temperaturfühler 73 erfaßt die Überhitzungstemperatur des Sekundärmediums im Sekundärsystem 14 an der Druckseite des Verdichters 66, während das Ventil 39 den Abzug von eingeengter Abwasser-Sumpflösung aus dem Sumpfbereich 53 des ersten Wärmetauschers 52 dann freigibt, wenn bspw. die Abwasser-Sumpflösung derart konzentriert ist, daß die gewünschten Verdampfungswerte des Abwassers nicht mehr erreicht werden. Dieses Maß an Abwasserdampf ist ein Maß für die Funktion des zweiten Wärmetauschers 62 und damit des Betriebszustands des Sekundärsystems 14, dessen bei einer Verschlechterung des Wärmeübergangs verringerter Massenstrom durch eine Druckerhöhung des Verdichters 66 kompensiert werden muß, was eine Erhöhung der Überhitzungstemperatur am druckseitigen Ausgang des Verdichters 66 zur Folge hat. Aus diesem Grunde ist der Temperaturfühler 73 unmittelbar am Druckausgang des Verdichters 66 angeordnet. Erhöht sich also die Überhitzungstemperatur über einen gewünschten Sollwert oder Sollwertbereich, so wird in Abhängigkeit davon die erste Regeleinheit 72 den Antrieb 74 des Ventils 39 ansteuern und dieses zum Abziehen von Abwasser-Sumpflösung öffnen. Das Öffnen des Ventils 39 erfolgt dabei getaktet, vorzugsweise in gleichmäßigen kurzen Intervallen. Die mit dem Ventil 39 versehene Rohrleitung 36 ist durchmessergroß und möglichst kurz und mündet geradlinig in den unmittelbar unter dem Sumpfbereich 53 des ersten Wärmetauschers 52 stehenden Abschlämmbehälter 37.

Die Regeleinrichtung 71 besitzt eine zweite Regleinheit 76, die einerseits mit einer Füllstandssonde 77 und andererseits mit der Förderpumpe 29 für das zu destillierende Abwasser und/oder gemäß Figur 2 mit einem Antrieb 78 eines Zulaufventils 79 in der Zulaufleitung 28 verbunden ist. Die zweite Regeleinheit 76 dient einerseits dazu, den Zufluß von zu destllierendem Abwasser dann zu ermöglichen, wenn ein entsprechender Anteil an Abwasser im ersten Wärmetauscher 52 verdampft ist; sie dient aber auch dazu, den Füllstand des Abwassers im ersten Wärmetauscher 52 auf den gewünschten Wert dann zu bringen, wenn aus dem Sumpfbereich 53 des ersten Wärmetauschers 51 eingeengte Abwasser-Sumpflösung abgezogen worden ist. Auch die zweite Regeleinheit 76 ist derart ausgebildet, daß sie das Zulaufventil 79 (bzw. die Pumpe 29) getaktet, vorzugsweise in gleichmäßigen kurzen Intervallen, öffnet und schließt. Dies hat einerseits zur Folge, daß die Wärmebilanz innerhalb des Primärsystems 13 bzw. des gesamten Zweikreissystems 12 ohne größere Änderungen bleibt, und andererseits, daß die schaumbildenden Bestandteile im zu destillierenden Abwasser keinen Schaum innerhalb des ersten Wärmetauschers 52 in einem Ausmaß bilden können, der die Wärmebilanz im System und/oder die Füllstandsmessung stören könnte. Die zweite Regeleinneit 76 wird also dann, wenn die erste Regeleinheit 72 in Betrieb ist und das Ventil 79 getaktet öffnet und schließt, dieser unmittelbar folgen und ein getaktetes Zuströmen des zu reinigenden Abwassers ermöglichen.

Üblicherweise sind in organisch belasteteten Abwässern mehr oder weniger große Anteiie an niedersiedenden Bestandteilen, wie Inertgase vorhanden. Diese Gase, die leichter als. Wasserdampf sind, werden bei der Kondensation des Abwasserdampfes im zweiten Wärmetauscher 62 ausgasen und sich an einer strömungstechnisch urgünstigen Stelle, wie bspw. der mit 81 bezeichneten Stelle absetzen. Derartige Gasnester 81 sind, wenn sie sich vergrößern, nachteilig für die Wärmebilanz des zweiten Wärmetauschers 62 deshalb, weil sich diese leichteren Gase wie ein Wärmeisolator über die Wärmetauscherflächen des zweiten Wärmetauschers 62 legen und damit einen Wärmeaustausch erschweren bzw. herabsetzen. Um dies zu verhindern, ist in diesem Bereich 81 eine Entlüftungsleitung 82 vorgesehen. Diese Entlüftungsleitung 82 kann ständig offen sein. Beim Ausführungsbeispiel jedoch ist ein Ventil 83 vorgesehen, dessen Antrieb 84 mit der ersten Regeleinheit 72 verbunden ist. Da eine Verschlechterung der Wärmebilanz des Primärsystems 13 und damit auch des Sekundärsystems 14 nicht nur von der Konzentration der Abwasser Sumpflösung abhängig ist, sondern auch von dem Ausmaß und Umfang der Gasnester 81 abhängig sein kann, ist damit erreicht, daß mit einem Erfassen einer Wärmebilanzinstabilität aufgrund einer Erhöhung der Überhitzungstemperatur im Sekundärsystem 14 auch das oder die Gasnester 81 entlüftet werden. Dieser Entlüftungsvorgang erfolgt zweckmäßigerweise kontinuierlich über eine bestimmte Zeitdauer.

Diejenigen Gase, die schwerer als Wasserdampf sind, werden sich mit dem kondensierenden Wasserdampf am Boden 86 des zweiten Wärmetauschers 62 niederschlagen und aufgrund der hohen Temperatur von bspw. 124°C des Wasserdestillats nicht wieder in diesem lösen. Diese Gase werden in der dargestellten Weise über eine obere Leitung 87 in einen Zwischenbehälter 88 strömen und dort über einen Auslaß 89 ständig entlüftet werden, während das Destillat über eine untere Leitung 91 in den Zwischenbehälter 88 und von dort in die Ausgangsleitung 48 abfließen kann.

Als Kriterium für die Einleitung von Abwasser in öffentliche kläranlagen gibt es neben dem Summenparamter CSB zusätzlich den Grenzwert des Ammoniumgehaltes des Abwassers. Um den Ammoniumgehalt im Destillat zu reduzieren, wird mittels einer Pumpe 94 über eine Rohrleitung 93, an deren in dem Tauchrohr 58 des Zyklons 56 angeordnetes Ende eine Düse 92 angeordnet ist, z.B. saure, wässrige Ammoniumsulfatlösung oder wässerige Schwefelsäurelösung od. dgl. im Gegenstrom zur Bewegungsrichtung des Abwasserdampfes in das Tauchrohr 58 des Zyklons 56 vorzüglich kontinuierlich eingesprüht.

Das im Abwasserdarnpf befindliche Ammoniak oder Ammonium (in Wassertröpfchen) kommt so mit der eingesprühten Lösung in Kontakt und wird mit ihr zur Zyklonwand hin ausgeschleudert. Über die dabei ablaufenden Reaktionen bilden sich Salzlösungen. Diese werden aus dem Zyklon über das bodenseitige Rohr 57 entweder nur nach außen oder wieder in den Abschlämmbehälter 37 geführt. Um die so abgeführte Ammoniummenge reduziert sich der Gehalt an Ammonium im Destillat. Eine derartige Wäsche des aus dem Zyklon austretenden Abwasserdampf wird auch unabhängig von der weiteren erfindungsgemäßen Regelungsmaßnahmen möglich.

Das erfindungsgemäße Verfahren und die erfindungsgemäße Vorrichtung 11 wurden anhand eines Zweikreissystems 12 beschrieben, in welchem die Verdampfungs- und Kondensationsschritte im Überdruck erfolgen. Es versteht sich, daß zur Reinigung bzw. Destillation von im wesentlichen organisch belasteten Abwässern auch eine Vakuumverdampfung stattfinden kann. Bei der Erfassung eines Betriebsparameters im Sekundärkreis 14, welcher Parameter eine Prozeßinstabilität im Primärsystem und damit im Sekundärsystem anzeigt, kann als ein solcher statt die Überhitzungstemperatur auch die Stromaufnahme des elektrischen Antriebs des Verdichters 66 gewählt werden. Es ist deshalb möglich, die erste Regeleinheit 72 statt mit einem Überhitzungstemperaturfühler mit einem Meßgerät zum Messen der Stromaufnahme des elektrischen Verdichterantriebs zu verbinden.

## Patentansprüche

1. Verfahren zum Reinigen von insbesondere im wesentlichen organisch belastetem Abwasser, bei dem das Abwasser innerhalb eines Primärsystems und ein Sekundärmedium, vorzugsweise Rohwasser, innerhalb eines einen Verdichter enthaltenden, vom Primärsystem räumlich getrennten, in sich geschlossenen Sekundärsystems verdampft und kondensiert wird, wobei das Abwasser durch Erhitzung an dem zuvor im Verdichter weiter erwärmten Sekundärmediums und dieses im Sekundärsystem durch Kondensation des Abwasserdampfes verdampft wird, und bei dem der Abwasserdampf durch einen Zyklon geführt und die bei der Verdampfung des Abwassers entstehende eingeengte Abwasser-Sumpflösung abgezagen wird, dadurch gekennzeichnet, daß die eingeengte Abwasser-Sumpflösung in Abhängigkeit von einem Betriebsparameter des Sekundärsystems dann abgezogen wird, wenn dieser einen Sollwertbereich übersteigt, und daß das Abwasser in Abhängigkeit von seinem Füllstand im Primärsystem eingelassen wird.

2. Verfahren nach Anspruch 1, dadurch gekennzeichnet, daß als Betriebsparameter die Überhitzungstemperatur des Sekundärmediums an der Druckseite des Verdichters verwendet wird.

3. Verfahren nach Anspruch 1, dadurch gekennzeichnet, daß als Betriebsparameter die Stromaufnahme des Verdichters verwendet wird.

4. Verfahren nach mindestens einem der Ansprüche 1 bis 3, dadurch gekennzeichnet, daß die Abwasser-Sumpflösung getaktet, vorzugsweise im gleichmäßigen Intervallen abgezogen wird.

5. Verfahren nach mindestens einem der Ansprüche 1 bis 4, dadurch gekennzeichnet, daß sich an einer oder mehreren strömungstechnisch ungünstigen Stelle(n) bei der Abwasserdampfkondensation absetzende Gase, die leichter als der Abwasserdampf sind, wie bspw. Inertgase, abgelassen werden.

6. Verfahren nach Anspruch 5, dadurch gekennzeichnet, daß das Ablassen der leichteren Gase parallel zum Abziehen der Abwasser-Sumplfösung vorgenommen wird.

7. Verfahren nach mindestens einem der vorigen Ansprüche, dadurch gekennzeichnet, daß in das Zyklon im Gegenstom zur Bewegungsrichtung des Abwasserdampfes saure wässrige Ammoniumsulfatlösung oder wässrige Schwefelsäurelösung eingesprüht wird.

8. Vorrichtung zum Reinigen von insbesondere im wesentlichen organisch belastetem Abwasser, mit einem Primärsystem (13) für das Abwasser und einem davon räumlich getrennten, einen verdichter (66) enthaltenden, in sich geschlossenen Sekundärsystem (11) zur Wärmeübertragung, wobei das Primärsystem (13) mit dem Sekundärsystem (11) durch einen ersten Wärmetauscher (62) zur Verdampfung des Abwassers und einen zweiten Wärmetauscher (62) zur Kondensation des Abwasserdampfes gekoppelt ist. und mit einem im Brüdenraum zwischen dem Verdampfer und dem Kondensator angeordneten Zyklon (56), **gekennzeichnet durch** eine erste Regeleinheit(72), die in Abhängigkeit von einem Meßwert eines Betriebsparameters des Sekundärsystems (14) eine Abzugsöffnung im Bodenbereich (53) des ersten Wärmetauschers (52) zum Abziehen von eingeengter Abwasser-Sumpflösung öffnet bzw. schließt, und durch eine zweite Regeleinheit (76) , die in Abhängigkeit von einem Meßwert des Füllstandes im Primärsystem (13) den Zulauf von Abwasser öffnet bzw. sperrt.

9. Vorrichtung nach Anspruch 8, dadurch gekennzeichnet, daß die erste Regeleinheit (72) mit einem Überhitzungstemperaturfühler (73) verbunden ist, der unmittelbar an der Druckseite des Verdichters (66) angeordnet ist.

10. Vorrichtung nach Anspruch 8, dadurch gekennzeichnet, daß die erste Regeleinheit (72) mit einem Gerät zur Messung der Stromaufnahme des Elektromotors des Verdichters (66) verbunden ist

11. Vorrichtung nach mindestens einem der Ansprüche 8 bis 10, dadurch gekennzeichent, daß das Öffnen und Schließen der Abzuzsöffnung für die Abwasser-Sumpflösung in vorzugsweise gleichmäßigen Intervallen getaktet ist.

12. Vorrichtung nach mindestens einem der Ansprüche 8 bis 11, dadurch gekennzeichnet, daß die Abzugsöffnung durchmessergroß ausgeführt und über eine kurze Rohrleitung (36) mit einem unmittelbar darunter angeordneten Auffangbehälter (37) verbunden ist.

13. Vorrichtung nach mindestens einem der Ansprüche 8 bis 12, dadurch gekennzeichnet, daß der zweite Wärmetauscher (62) an einer oder mehreren in Bezug auf die Abwasserdampfkondensation stömungstechnisch ungünstigen Stelle (81) mit einer Auslaßöffnung (82) für Gase, die leichter als der Abwasserdampf sind. wie bspw. Inertgase, versehen ist.

14. Vorrichtung nach mindestens einem der Ansprüche 8 bis 10 und nach Anspruch 12, dadurch gekennzeichnet, daß die Auslaßöffnung (82) für die leichteren Gase mit einem Ventil (83) versehen ist, das mit der ersten Regeleinheit (72) verbunden ist.

15. Vorrichtung nach mindestens einem der Ansprüche 8 bis 14, dadurch gekennzeichnet, daß in das Zyklon (56) das mit einer Sprühdüse (92) versehene Ende einer Rohrleitung (93) gerichtet ist, über die die im Gegenstom zur Bewegungsrichtung des Abwasserdampfes saure wässrige Ammoniumsulfatlösung oder wässrige Schwefelsäurelösung einsprühbar ist.

## Claims

1. A process for purifying substantially organically polluted waste water in particular, where the waste water is evaporated and condensed within a primary system and a secondary medium, preferably raw water, is evaporated and condensed within a closed secondary system containing a compressor and being spatially separated from the primary system, where the waste water is evaporated by heating by the secondary medium which was previously further heated in the compressor, and the secondary medium is evaporated in the secondary system by condensation of the waste water vapor, and where the waste water vapor is conducted through a cyclone and the concentrated waste water sump solution generated during the evaporation of the waste water is drawn off, characterized in that the concentrated waste water sump solution is drawn off as a function of an operational parameter of the secondary system at a time when the latter exceeds a set value range, and that the waste water is admitted as a function of the fill level in the primary system.

2. A process in accordance with claim 1, characterized in that the overheating temperature of the secondary medium at the pressure side of the compressor is used as the operational parameter.

3. A process in accordance with claim 1, characterized in that the current intake of the compressor is used as the operational parameter.

4. A process in accordance with at least one of claims 1 to 3, characterized in that the waste water sump solution is drawn off in cycles, preferably in even intervals.

5. A process in accordance with at least one of claims 1 to 4, characterized in that gases, which are lighter than the waste water vapor and collect during the waste water condensation at one or a plurality of place(s) unfavorable from the viewpoint of flow technology, such as insert gases, are exhausted.

6. A process in accordance with claim 5, characterized in that the exhaust of the lighter gases is performed prallel with the draw-off of the waste water sump solution.

7. A process in accordance with at least one of the previous claims, characterized in that acid aqueous ammonium sulfate solution or aqueous sulfuric acid solution is sprayed into the cyclone in counterflow to the direction of movement of the waste water vapor.

8. A device for purifying substantially organically polluted waste water in particular, comprising a primary system (13) for the waste water and a closed secondary system (14), spatially separated therefrom and containing a compressor (66), for heat transfer, where the primary system (13) is coupled with the secondary system by means of a first heat exchanger (52) for evaporating the waste water and a second heat exchanger (62) for condensing the waste water vapor, and comprising a cyclone (56) disposed in the vapor chamber between the evaporator and the condenser, characterized by a first control unit (72) which opens or closes a draw-off opening in the bottom area (53) of the first heat exchanger (52) for drawing off concentrated waste water sump solution as a function of a measured value of an operational parameter of the secondary system (14), and by a second control unit (76), which opens or blocks the admission of waste water as a function of measured value of the fill level in the primary system (13).

9. A device in accordance claim 8, characterized in that the first control unit (72) is connected with an overheating temperature sensor (73), which is disposed directly at the pressure side of the compressor (66).

10. A device in accordance with claim 8, characterized in that the first control unit (72) is connected with a device for measuring the current intake of the electric motor of the compressor (66).

11. A device in accordance with at least one of claims 8 to 10, characterized in that the opening and closing of the draw-off opening for the waste water sump solution is cycled in preferably even intervals.

12. A device in accordance with at least one of claims 8 to 11, characterized in that the draw-off opening is diameter-sized and is connected via a short pipeline (36) with an elutriation container (37) located directly under it.

13. A device in accordance with at least one of claims 8 to 12, characterized in that the second heat exchanger (62) is provided, at one or a plurality of places (81) unfavorable from the viewpoint of flow technology, with an exhaust opening (82) for gases which are lighter than the waste water vapor, such as inert gases.

14. A device in accordance with at least one of claims 8 to 10, characterized in that the exhaust opening (82) for the lighter gases is provided with a valve (83), which is connected with the first control unit (72).

15. A device in accordance with at least one of claims 8 to 14, characterized in that the end of a pipeline (93) provided with a spray nozzle (92) is directed into the cyclone (56), by means of which acid aqueous ammonium sulfate solution or aqueous sulfuric acid solution can be prayed in counterflow to the direction of movement of the waste water vapor.

## Revendications

1. Procédé d'épuration d'eau usée, notamment d'eau essentiellement chargée de matières organiques, selon lequel on évapore et condense l'eau usée à l'intérieur d'un système primaire ainsi qu'un fluide secondaire, de préférence de l'eau brute, à l'intérieur d'un système secondaire en soi fermé, spatialement séparé du système primaire et contenant un compresseur, l'eau usée étant évaporée par échauffement au contact du fluide secondaire préalablement échauffé à une température supérieure dans le compresseur et le fluide secondaire étant évaporé dans le système secondaire par condensation de la vapeur d'eau usée, et selon lequel on fait passer la vapeur d'eau usée dans un cyclone et on évacue la solution résiduelle concentrée d'eau usée produite lors de l'évaporation de l'eau usée, caractérisé en ce qu'on évacue la solution résiduelle concentrée d'eau usée en fonction d'un paramètre d'exploitation du système secondaire, lorsque ce paramètre dépasse une plage de valeur de consigne, et en ce qu'on admet l'eau usée en fonction de son niveau de remplissage dans le système primaire.

2. Procédé selon la revendication 1, caractérisé en ce qu'on utilise comme paramètre d'exploitation la température de surchauffe du fluide secondaire du côté de refoulement du compresseur.

3. Procédé selon la revendication 1, caractérisé en ce qu'on utilise comme paramètre d'exploitation la consommation électrique du compresseur.

4. Procédé selon l'une quelconque des revendications 1 à 3, caractérisé en ce qu'on évacue la solution résiduelle d'eau usée de façon cyclique, de préférence à intervalles réguliers.

5. Procédé selon l'une quelconque des revendications 1 à 4, caractérisé en ce qu'on laisse échapper des gaz plus légers que la vapeur d'eau usée, par exemple des gaz inertes, qui s'accumulent en un ou plusieurs endroits défavorables en matière d'écoulement lors de la condensation de la vapeur d'eau usée.

6. Procédé selon la revendication 5, caractérisé en ce que l'échappement des gaz plus légers est entrepris parallèlement à l'évacuation de la solution résiduelle d'eau usée.

7. Procédé selon l'une quelconque des revendications précédentes, caractérisé en ce qu'on pulvérise dans le cyclone, à contre-courant par rapport à la direction de déplacement de la vapeur d'eau usée, une solution aqueuse acide de sulfate d'ammonium ou une solution aqueuse d'acide sulfurique.

8. Dispositif d'épuration d'eau usée, notamment d'eau essentiellement chargée de matières organiques, comportant un système primaire (13) pour l'eau usée et un système secondaire (14) en soi fermé pour la transmission de chaleur, spatialement séparé du système primaire et contenant un compresseur (66), ledit système primaire (13) étant couplé au système secondaire (14) par un premier échangeur de chaleur (52) pour l'évaporation de l'eau usée et par un second échangeur de chaleur (62) pour la condensation de la vapeur d'eau usée, ainsi qu'un cyclone (56) disposé dans la chambre de vapeur chaude entre l'évaporateur et le condenseur, caractérisé par une première unité de régulation (72) qui, en fonction d'une valeur de mesure d'un paramètre d'exploitation du système secondaire (14), ouvre ou ferme une ouverture d'évacuation dans la région de fond (53) du premier échangeur de chaleur (52) afin d'évacuer la solution résiduelle concentrée d'eau usée, et par une seconde unité de régulation (76), qui ouvre ou ferme l'admission d'eau usée en fonction d'une valeur de mesure du niveau de remplissage dans le système primaire (13).

9. Dispositif selon la revendication 8, caractérisé en ce que la première unité de régulation (72) est reliée à une sonde de température de surchauffe (73), qui est directement disposée sur le côté de refoulement du compresseur (66).

10. Dispositif selon la revendication 8, caracté risé en ce que la première unité de régulation (72) est reliée à un appareil pour mesurer la consommation de courant du moteur électrique du compresseur (66).

11. Dispositif selon l'une quelconque des revendications 8 à 10, caractérisé en ce que l'ouverture et la fermeture de l'ouverture d'évacuation pour la solution résiduelle d'eau usée sont effectuées de façon cyclique, de préférence à intervalles réguliers.

12. Dispositif selon l'une quelconque des revendications 8 à 11, caractérisé en ce que l'ouverture d'évacuation est réalisée avec un grand diamètre, et elle est reliée, par une courte conduite (36), à un récipient collecteur (37) disposé directement en dessous d'elle.

13. Dispositif selon l'une quelconque des revendications 8 à 12, caractérisé en ce que le second échangeur de chaleur (62) est doté, en un ou plusieurs endroits (81) défavorables en matière d'écoulement au regard de la condensation de la vapeur d'eau usée, d'une ouverture d'échappement (82) pour des gaz qui sont plus légers que la vapeur d'eau usée, par exemple des gaz inertes.

14. Dispositif selon l'une quelconque des revendications 8 à 10 et selon la revendication 13, caractérisé en ce que l'ouverture d'échappement (82) pour les gaz plus légers est pourvue d'une soupape (83), qui est reliée à la première unité de régulation (72).

15. Dispositif selon l'une quelconque des revendications 8 à 14, caractérisé en ce que l'extrémité, pourvue d'une tuyère de pulvérisation (92), d'une conduite (93) est dirigée dans le cyclone (56) et permet d'y pulvériser, à contre-courant par rapport à la direction de déplacement de la vapeur d'eau usée, une solution aqueuse acide de sulfate d'ammonium ou une solution aqueuse d'acide sulfurique.
